# EUROPEAN PATENT SPECIFICATION

(11) **EP 1 437 647 B1**
(45) Date of publication and mention of the grant of the patent: **30.09.2009**
(21) Application number: 03000505.2
(22) Date of filing: 08.01.2003
(51) Int. Cl.: G06F 9/44

(54) **Method and system for recording macros in a language independent syntax**
Verfahren und System zum Aufzeichnen von Makros in einer sprachunabhängigen Syntax
Méthode et système pour enregistrer des macros dans une syntaxe indépendante du langage

(43) Date of publication of application: 14.07.2004
(73) Proprietor: MICROSOFT CORPORATION, Redmond, WA 98052 (US)
(72) Inventor: Cole, David Peter, S.W. Issaquah, Washington 98027 (US); Mathew, Abraham, S.W. Mountlake Terrace, Washington 98043 (US)
(74) Representative: Grünecker, Kinkeldey, Stockmair & Schwanhäusser Anwaltssozietät

(56) References cited:
- US-A- 5 542 085
- US-A- 5 991 537
- US-B1- 6 237 136
- APPLIX, INC.: "ELF User's Guide (pages i-xxii, chapters 1-3)" [Online] February 2000 (2000-02) XP002255711 Retrieved from the Internet: <URL: http://www-uxsup.csx.cam.ac.uk/pwf-linux/a pplix/elfusers.pdf> [retrieved on 2003-09-24] * page 2-2 - page 3-26 *
- COREL CORPORATION: "Perfectscript and Macro User Guide (pages i-iii, chapters 1,2)" [Online] 1999 XP002255712 Retrieved from the Internet: <URL: http://support.law.cornell.edu/technology/ downloads/pdf/macro9en.pdf> [retrieved on 2003-09-24] * the whole document *

## Description

The invention relates in general to macro recording systems within a computing environment. More particularly, the present invention relates to a method and system for creating macro instructions in a syntax that is independent of the computer language in which the macro will be eventually recorded, so that the macro can be processed into multiple languages of source code without having to recreate the macro.

Computing devices are well-known in the art and widely used. For example, computing devices may take the form of a personal computer, a centralized computer terminal with computer terminal access, or a widely distributed system with computing devices connected to a network such as the Internet. Although some computing devices may operate with little or no human intervention, many computing devices require human input to operate. Computing devices, such as the personal computer, typically have a keyboard for inputting numerical and textual information.

Depending on the type of work performed by the computing device, the computing device may also have other types of inputs. For example, with the popularity of graphical user interfaces, the use of graphic input devices has dramatically increased. Graphical input devices include devices such as a computer mouse, graphics tablets, digitizers, and light pens. These devices allow a graphical element such as a cursor to be moved and positioned on a computer screen. This graphical element may be used to select functional commands to direct the operation of the computer or may assist in the input of information.

The aforementioned computer mouse is one of the most popular graphical input devices. The mouse connects to the computing device and is used to select commands and input graphical information. By moving the mouse across a surface, the relative movements of the mouse are communicated to the computing device, thereby moving the graphical cursor. Buttons on the mouse access and activate commands and input graphical information by placing the cursor.

Computing devices can also accept other forms of input from a user based on the application operating on the computing device, including voice input, input from digital cameras, input from video recorders, and input from other computing resources coupled via a local or wide area network connection to the computing device.

When operating a computing device, a user can interact with the input devices to direct the operation of the computing device. Many times the computing device requires the same series of inputs to perform a particular operation. Performing this set of repetitive operations may include several inputs from one or more input devices. For example, a particular operation may require a mouse action to initiate a program and then, textually input an access password with the keyboard. A keyboard, mouse, and other inputs are often needed to conclude the repetitive operation. Each time the user desires to perform this repetitive operation, the user must go through the same sequence using the same input devices. Not only is this time consuming, but the sequence may be prone to errors. In some situations, repetitive operations may be simplified with a macro.

Macros are used to automate repetitive keyboard, mouse, and other inputs in a particular application. In general, macros are typically files containing repetitive instructions. Once created, the macro may be replayed by the computing device. For example, many software applications have macro recording and playback capabilities. In these software applications, a user may record a macro to perform a particular operation or a series of operations and give that macro a name. Thereafter, that operation or the series of operations may be performed by executing that named macro, thereby saving the user the time and effort of repeating all of the steps of the macro. To run the macro, the software application typically has a macro playback facility, which can be initiated by command or through the use of a shortcut command.

With the current macro recorder technology, it is generally possible to record a macro in only one language, Visual Basic for Applications (VBA). However, many other programming languages exist which could otherwise be used to record and run macros. Furthermore, users prefer to record macros in the language of their choice, based on the user's personal preferences, skill, and proficiency level. In order to record macros in a language other than VBA, an application developer would have to rewrite the macro-recorder for each language within which a user desires to record macros. Such a process is not only expensive and time consuming, but can also be error-prone and lead to inconsistent behavior between macros recorded in different languages. Providing a method and system for recording a macro in multiple languages with minimal effort by the software application would save users and application developers time and money.

ELF User's Guide (Applix, Inc.) discloses aspects of two ways to create an ELF macro.

US-B1-6237136 discloses a system and method for automatically creating source code example files for an application program in a plurality of programming languages.

It is the object of the present invention to provide an improved method, system and corresponding computer-readable medium for recording macro instructions in any of a plurality of source code languages.

This object is solved by the subject matter of the independent claims.

Preferred embodiments are defined in the dependent claims.

The inventive methods and system disclosed herein provide a means for recording a computer macro in a computer language independent syntax, thereby allowing a software application to record the instructions only once and then convert the instructions into a source code of any of a number of computer languages. Thus, one aspect of the present invention is to allow a user, wishing to record a macro in one or more different computer languages, to begin the recording of the macro by turning on a recording system in the computer system. The recording system typically comprises a macro recorder located in a macro recording engine. Both the macro recorder and the macro recording engine can be located inside of a software application on the computer system.

The user can then proceed by performing one or more actions, which the user desires to record on the computer system. The actions are typically performed on a software application residing in the computer system. These actions can include a sequence of commands or keyboard strokes occurring while the user is interacting with the software application. The actions are typically converted by the software application into a series of instructions called the instruction list having a computer language independent syntax. The instruction list typically represents a computer-readable interpretation of the actions implemented by the user and recorded by the recording system. The computer language independent syntax of the instructions can allow the instructions, once created, to be converted into one or more source codes of differing computer languages. The computer language independent syntax does not typically mirror the computer language used by the software application.

The instruction list typically contains both instructions and operands in either a one-to-one or a one-to-zero relationship respectively. The operand typically specifies the information that is to be operated on or manipulated. User actions are converted into the instruction list by the software application with the help of a builder, which can be located in the software application. The instructions are constructed in a computer language independent syntax. Once completed, the instruction list can be sent to one or more processors to be converted into source code of a particular computer language. Since the instruction list is written in a computer language independent syntax, the instruction list can be converted into different computer languages by different application developers and users based on developer and user preferences. For example, User A may choose to record the macro in Language A while User B may choose to record the macro in Language B. If both users record the same actions, then the same instruction list is generated using the language independent syntax, but the instruction list is processed by different processors into Language A and Language B. In another exemplary embodiment, it is possible that the instruction list created using the language independent syntax can be converted into multiple computer languages at one time without having to recreate the instructions and instruction list prior to being sent to each different processor.

### BRIEF DESCRIPTION OF DRAWINGS

For a more complete understanding of the present invention and the advantages thereof, reference is now made to the following description in conjunction with the accompanying drawings in which:
Fig. 1A is a block diagram illustrating an exemplary operating environment for implementation of various embodiments of the present invention.
Fig. 1B is a block diagram of a macro building and recording system for recording macros in an object instruction language constructed in accordance with an exemplary embodiment of the present invention;
Fig. 2 is a block diagram of a unified modeling language diagram illustrating the construction of an instruction list using an object instruction language in accordance with an exemplary embodiment of the present invention;
Fig. 3 is a flow chart illustrating a process for recording a macro using an object instruction language in accordance with an exemplary embodiment of the present invention;
Fig. 4 is a flow chart illustrating a process for creating an instruction list for a macro using an object instruction language in accordance with an exemplary embodiment of the present invention;
Fig. 5 is a flow chart illustrating a process for verifying proper construction of an instruction written in an object instruction language in accordance with an exemplary embodiment of the present invention.

### DETAILED DESCRIPTION OF THE EXEMPLARY EMBODIMENTS

The present invention supports a computer-implemented method for recording a macro in an object instruction language ("OIL") which is a computer language independent syntax. This independent syntax can be used to record a macro in one language and then implement it in a variety of other programming languages. The independent syntax of OIL assists programmers by converting the instruction steps of a macro in a specific language into a universal set of instructions that can be adapted to a variety of languages. Utilizing the OIL language, a programmer will not have to recreate the same macros in a variety of different languages. The inventions can be more readily understood by reference to the accompanying figures.

Although exemplary embodiments of the present invention will be generally described in the context of a software module and an operating system running on a personal computer, those skilled in the art will recognize that the present invention can also be implemented in conjunction with other program modules for other types of computers. Furthermore, those skilled in the art will recognize that the present invention may be implemented in a stand-alone or in a distributed computing environment. In a distributed computing environment, program modules may be physically located in different local and remote memory storage devices. Execution of the program modules may occur locally in a stand-alone manner or remotely in a client/server manner. Examples of such distributed computing environments include local area networks of an office, enterprise-wide computer networks, and the global Internet.

The detailed description which follows is represented largely in terms of processes and symbolic representations of operations by conventional computer components, including processing units, memory storage devices, display devices and input devices. These processes and operations may utilize conventional computer components in a distributed computing environment, including remote file servers, remote computer servers, and remote memory storage devices. Each of these conventional distributed computing components is accessible by a processing unit via a communications network.

The processes and operations performed by the computer include the manipulation of signals by a processing unit or remote server and the maintenance of these signals within data structures resident in one or more of the local or remote memory storage devices. Such data structures impose a physical organization upon the collection of data stored within a memory storage device and represent specific electrical or magnetic elements. These symbolic representations are the means used by those skilled in the art of computer programming and computer construction to most effectively convey teachings and discoveries to others skilled in the art.

The present invention includes a computer program which embodies the functions described herein and illustrated in the appended flow charts (or logic flow diagrams). However, it should be apparent that there could be many different ways of implementing the invention in computer programming, and the invention should not be construed as limited to any one set of computer program instructions. Further, a skilled programmer would be able to write such a computer program to implement the disclosed invention without difficulty based on the flow charts and associated description in the application text, for example. Therefore, disclosure of a particular set of program code instructions is not considered necessary for an adequate understanding of how to make and use the present invention. The inventive functionality of the claimed computer program will be explained in more detail in the following description in conjunction with the remaining figures illustrating the program flow.

Referring now to the drawings, in which like numerals represent like elements throughout the several figures, aspects of the present invention and an exemplary operating environment for the implementation of the present invention will be described.

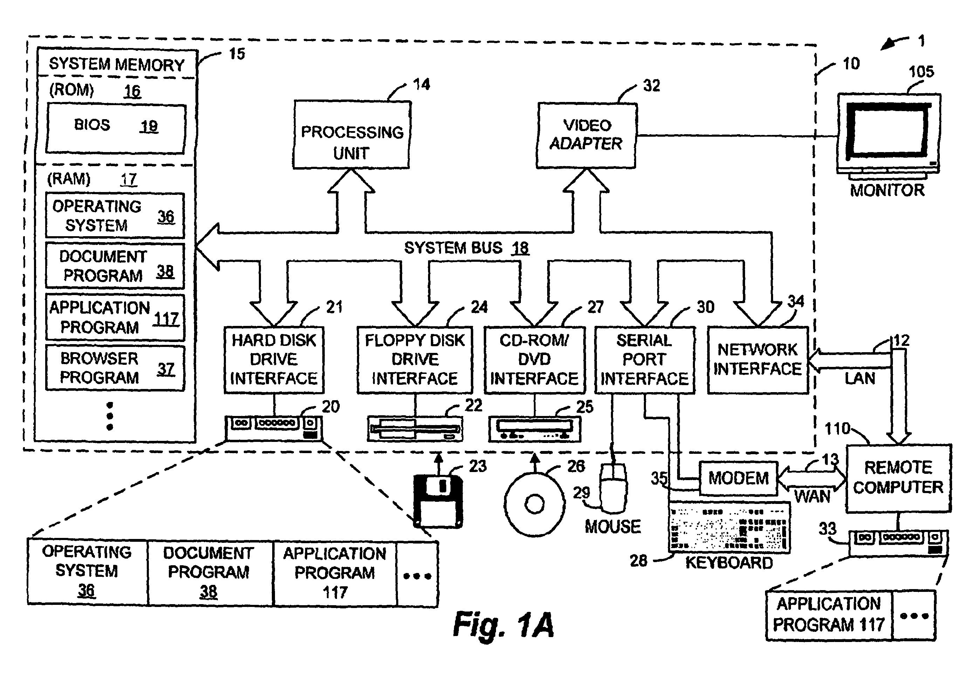

Fig. 1A is a block diagram illustrating an exemplary operating environment 1 for implementation of various embodiments of the present invention. Those skilled in the art will appreciate that Fig, 1A and the associated discussion are intended to provide a brief, general description of one exemplary embodiment of computer hardware and program modules, and that additional information is readily available in appropriate programming manuals, user's guides, and similar publications.

The exemplary operating environment **1** illustrated in Fig. 1A includes a general-purpose computing device that can be in the form of a conventional personal computer **10.** As shown in Fig. 1A, the personal computer **10** operates in a networked environment with logical connections to a remote server **110.** The logical connections between the personal computer **10** and the remote server **110** are represented by a local area network **12** and a wide area network **13.** Those of ordinary skill in the art will recognize that in this client/server configuration, the remote server **110** may function as a file server or computer server.

The personal computer **10** includes a processing unit **14,** such as a "PENTIUM" microprocessor manufactured by Intel Corporation of Santa Clara, Calif. The personal computer also includes system memory **15,** including read only memory (ROM) **16** and random access memory (RAM) **17,** which is connected to the processor **14** by a system bus **18.** An exemplary embodiment of the computer **10** utilizes a basic input/output system (BIOS) **19,** which is stored in the ROM **16.** Those skilled in the art will recognize that the BIOS **19** is a set of basic routines that helps to transfer information between elements of the personal computer **10.** Those skilled in the art will also appreciate that the present invention may be implemented on computers having other architectures, such as computers that do not use a BIOS **19**, and those that utilize other types of microprocessors for a processing unit **14**.

Within the personal computer **10**, a local hard disk drive **20** is connected to the system bus **18** via a hard disk drive interface **21.** A floppy disk drive **22,** which is used to read or write to a floppy disk **23,** is connected to the system bus **18** via a floppy disk drive interface **24.** A CD-ROM or DVD drive **25,** which is used to read a CD-ROM or DVD disk **26,** is connected to the system bus **18** via a CD-ROM or DVD interface **27.**

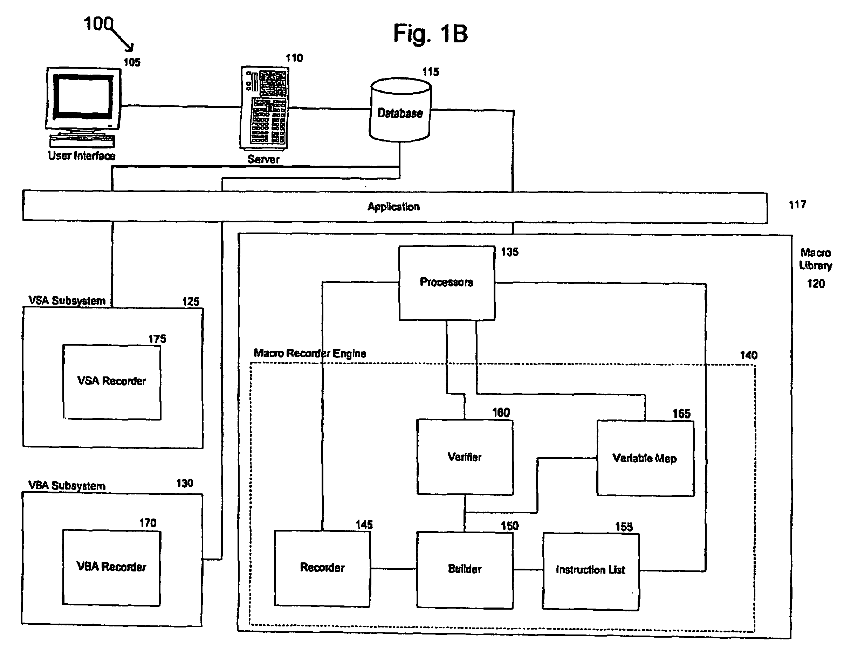

A user can enter commands and information into the personal computer **10** by using input devices, such as a keyboard **28** and/or pointing device, such as a mouse **29,** which are connected to the system bus **18** via a serial port interface **30.** Other types of pointing devices (not shown in Fig. 1) include track pads, track balls, digitizer pens, head trackers, data gloves, and other devices suitable for positioning a cursor on a monitor **105.** The monitor **105** or other kind of display device is connected to the system bus **18** via a video adapter **32.**

As depicted in Fig. 1A, a number of program modules can be stored on ROM **16,** RAM **17,** hard disk **21,** floppy disk **23,** or CD-ROM/DVD disk **26,** such as an operating system **36,** an application program module **117**, a browser program module **37,** and a document program **38.** Program modules include routines, sub-routines, programs, objects, components, data structures, etc., which perform particular tasks or implement particular abstract data types.

The remote server **110** in this networked environment is connected to a remote memory storage device **33.** This remote memory storage device **33** is typically a large capacity device such as a hard disk drive, CD-ROM or DVD drive, magneto-optical drive or the like. Those skilled in the art will understand that program modules, such as an application program module **117**, are provided to the remote server **110** via computer-readable media. The personal computer **10** is connected to the remote server **110** by a network interface **34,** which is used to communicate over a local area network (LAN) **12.**

In some embodiments, the personal computer **10** is also connected to the remote server **110** by a modem **35,** which is used to communicate over a wide area network (WAN) **13**, such as the Internet. The modem **35** is connected to the system bus **18** via the serial port interface **30.** The modem **35** also can be connected to the public switched telephone network (PSTN) or community antenna television (CATV) network. Although illustrated in Fig. 1A as external to the personal computer **10,** those of ordinary skill in the art can recognize that the modem **35** may also be internal to the personal computer **10,** thus communicating directly via the system bus **18.** It is important to note that connection to the remote server **11** via both the LAN **12** and the WAN 13 is not required, but merely illustrates alternative methods of providing a communication path between the personal computer **10** and the remote server **110.**

Those skilled in the art will appreciate that program modules, such as the operating system **36**, the application program module **117**, the browser program module **37,** and the document program **38** can be provided to the personal computer **10** via computer-readable media. In exemplary embodiments of the operating environment **1,** the computer-readable media can include the local or remote memory storage devices, which may include the local hard disk drive **20,** floppy disk **23,** CD-ROM/DVD **26,** RAM **17,** ROM **16,** and the remote memory storage device **33.** In some exemplary embodiments of the personal computer **10,** the local hard disk drive **20** is used to store data and programs.

Although other elements of the personal computer **10** and the operating environment **1** in general are not shown, those of ordinary skill in the art will appreciate that such components and the interconnection between them are known. Accordingly, additional details concerning the elements of the personal computer **10** and the operating environment **1** in general need not be disclosed in connection with the present invention for it to be implemented by those of ordinary skill in the art.

Referring to Fig. 1B, a block diagram is shown illustrating a macro building and recording system for recording macros in an OIL language **100** constructed in accordance with an exemplary embodiment of the present invention. The exemplary macro building and recording system **100** comprises a user interface **105**, a server **110,** a database **115,** and an application **117.** The application **117** comprises a macro library **120,** a Visual Studio for Applications (VSA) subsystem **125,** and/or a Visual Basic for Applications (VBA) subsystem **130.** The macro library **120** comprises processors **135** and a macro recorder engine **140.** The macro recorder engine **140** comprises a recorder **145,** a builder **150**, an instruction list **155,** a verifier **160,** and a variable map **165**. The VSA subsystem **125** comprises a VSA recorder **175**. The VBA subsystem **130** comprises a VBA recorder **170.**

The user interface **105** is communicably attached via a computer network to the server **110.** The user interface **105** provides a user with a means for communicating with the server **110,** database **115,** and application **117.** For example, the user interface **105** can transmit information to the application **117** and the database **115** through the server **110,** including data and queries. The user interface **105** can receive information from the database **115** and application **117** through the server **110.** In one exemplary embodiment, the user interface **105** is a personal computer.

The server **110** is communicably attached via a computer network to the user interface **105** and the database **115.** The server **110** typically represents a computer or a program that responds to commands from a user through a user interface **105.**

The database **115** is communicably attached via a computer network to the server **110** and the application **117.** The database **115** contains information related to software applications, language processors, and macro recorders. In one exemplary embodiment, the database **115** is a structured query language (SQL) server database.

The application **117** is a software application designed to assist the user in the performance of a specific task, including word processing, accounting, or inventory management

The macro library **120** is a dynamic link library. In one exemplary embodiment, the macro library **120** is contained within the application **117,** but the macro library **120** can reside independent of the application **117,** allowing the macro library to be accessed by multiple applications **117.** The processors **135** comprise one or more of a multitude of code processors including a C Plus Plus (C++) processor, a C Sharp (C#) processor, a VBA processor, and a Visual Basic.Net (VB.Net) processor. The processors **135** typically convert instructions received from the macro recorder engine **140** into language specific source code.

The recorder **145,** builder **150,** instruction list **155,** verifier **160,** and variable map **165** typically are component object model (COM) components. In one exemplary embodiment, the recorder **145,** builder **150**, instruction list **155,** verifier **160** and variable map **165** reside within the application **117.** However, in an alternate exemplary embodiment, these COM components can reside independent of the application **117**, so that a multitude of applications **117** could access a single builder **150.** The recorder **145** represents a program that records and stores macros created by a user's actions at the user interface **105.** The builder **150** can create an empty instruction list **155,** receive information from the recorder **145,** build an instruction using language independent syntax, send the instruction to the verifier **160** and variable map **165** to ensure proper instruction construction, and add the instruction to the instruction list **155.** The recorder **145** can then send the instruction list **155** to the processors **135** to convert the instruction list **155** into language specific source code.

The instruction list **155** is a list of instruction and operand pairs wherein the operand can be an optional part of the instruction depending on the format of the instruction. In one exemplary embodiment, the instruction list contains both instructions and operands in either a one-to-one or a one-to-zero relationship respectively. Once completed, the instruction list **155** typically contains a set of instructions in computer language independent syntax. The completed instruction list is sent to the processors **135** by the recorder **145.** The verifier **160** determines if the instructions in the instruction list **155** contain the correct number and type of operands. For example, the verifier **160** can ensure that the processors **135** will not have a problem generating source code from the received instruction list **155.** Once proper construction is determined, the verifier **160** sends the instruction back to the builder **150.** The variable map **165** can receive an instruction from the builder **150,** store the names and types of variables within the instruction, ensure that the user is not attempting to create a variable with the same name but different type, and return the instruction back to the builder **150.**

The VSA subsystem **125** is a dynamic link library comprising a VSA recorder **175**. The VSA recorder **175** typically receives macro source code from a VSA processor **135** and saves the source code within the VSA application **117** associated with the document in which the macro is created.

The VBA subsystem **130** is a dynamic link library comprising a VBA recorder **170.** The VBA recorder **170** typically receives macro source code from a VBA processor **135** and saves the source code within the VBA application **117** associated with the document in which the macro is created. In one exemplary embodiment, the intent of the system **100** is to generate an instruction list **155** that targets a processing stack where each instruction has the correct type and number of corresponding operands.

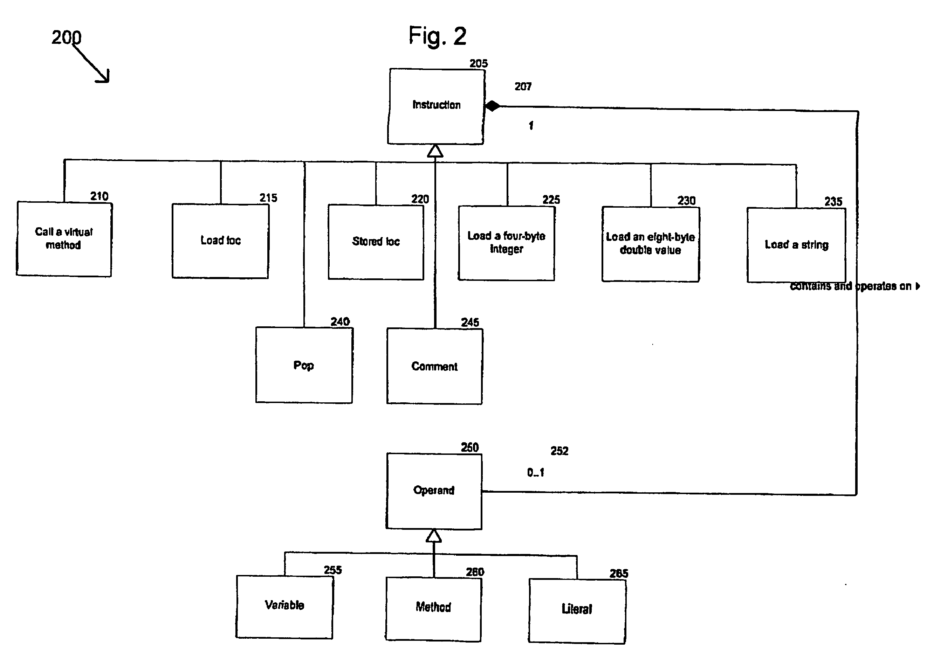

Fig. 2 is a unified modeling language (UML) diagram presented to illustrate the internal structure of an instruction list **200,** created using a computer language independent syntax, constructed in accordance with an exemplary embodiment of the present invention. Now referring to Figs. 1B and 2, the exemplary instruction list **200** comprises instructions **205** and operands **250** residing in the instruction list **155** of the builder **150.** The instruction **205** comprises callvirt **210,** ldloc **215,** stloc **220,** ldc_i4 **225,** ldc_r8 **230,** ldstr **235,** pop **240,** and comment **245.** The operand **250** comprises variable **255,** method **260,** and literal **265.** The diamond **207** and the designation 0..1 **252** typically represents that either zero or one operand **250** is associated with each instruction **205** in the instruction list **155.**

Variable **255** is a type of operand **250** and is typically defined as a named storage location capable of containing data that can be modified during program execution. Method **260** is a type of operand **250** defined as a process performed by an object when it receives a message. Literal **265** is a type of operand **250** defined as a value, used in an application **117,** that is expressed as itself rather than as a variable's value or the result of an expression. For example, the number "25", the character "a", and the string "hello" are all examples of literals **265.**

The instruction callvirt **210** represents a call for a virtual method. Callvirt **210** takes a method **260** as its operand **250.** Callvirt **210** also requires that any arguments associated with the method **260** have already been placed on a processing stack. The processing stack is used during the processing of the instruction list **155,** with the size of the processing stack going up and down as the instruction list **155** is processed. In one exemplary embodiment, some instructions in the instruction list **155** place elements onto the processing stack, some take elements off of the processing stack, and some instructions leave the processing stack alone. Callvirt **210** then consumes the arguments off the processing stack and executes the method **260.** If the method **260** returns anything, callvirt **210** pushes the returned information back onto the processing stack. Ldloc **215** represents the act of loading a local variable, which takes the variable **255** referred to by ldloc's **215** instruction and pushes the variable **255** onto the processing stack for consumption by something else, either another store operation or a call. Stloc **220** represents the act of storing a local variable, which takes a value that is on the processing stack and assigns the value into a variable **255.**

Ldc_i4 **225** represents the loading of a four byte integer onto the processing stack and takes a literal **265** as its corresponding operand. For example, if the instruction **205** ldc_i4 **225** were used, it would have to take numbers including 4, 8, and 12. Ldc_r8 **230** represents load an eight byte double value onto the processing stack. Like ldc_i4 **225,** ldc_r8 takes a literal **265** as its corresponding operand. Ldstr **235** loads a string onto the stack and takes a literal **265** as its corresponding operand **250.** Pop **240** does not take a corresponding operand, but rather, just discards whatever operand **250** is on top of the processing stack at the time the pop instruction **240** is given. The comment instruction **245** takes a literal **265** and submits it as a string in a comment. The processor **135** may modify the string to put it into the appropriate format for the language.

Those skilled in the art will appreciate that the instructions shown as a part of the instruction list **200** are only a small subset of the total possible set of instructions, including arithmetic and logical instructions, which can be processed using the language independent syntax.

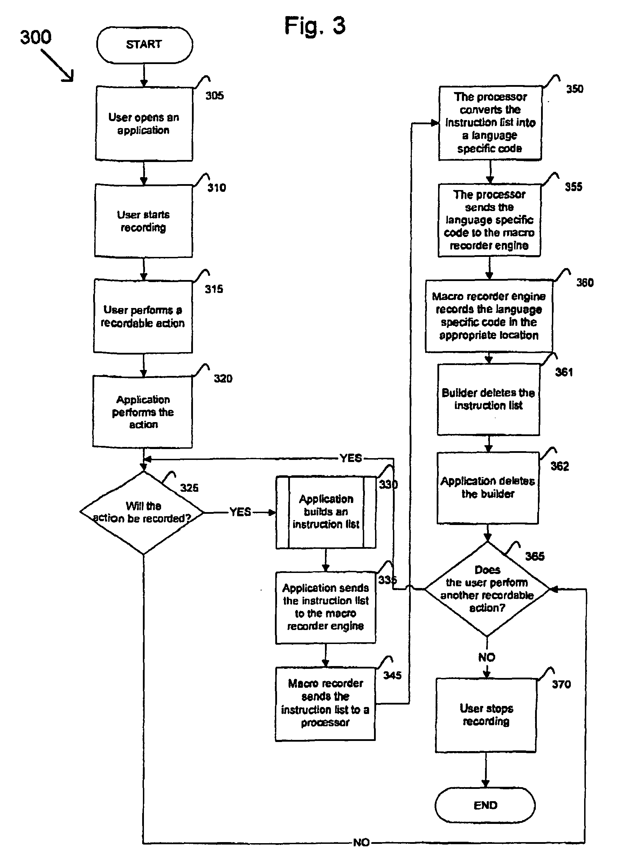

Figs. 3-5 are logical flowchart diagrams illustrating the computer-implemented processes completed by an exemplary method for recording a macro in a computer language independent syntax. Fig. 3 is a logical flowchart diagram **300** presented to illustrate the general steps of an exemplary process for recording a macro in a computer language independent syntax within the operating environment of the exemplary macro recording system **100** of Fig. 1.

Now referring to Figs. 1B and 3, the exemplary method **300** begins at the START step and proceeds to step **305,** in which a user opens an application **117** from a user interface **105.** The user interface **105** typically represents a point from which the client can access the application **117** through the server **110** and database **115.** The user typically opens the application **117** by selecting an icon corresponding to the application **117** on monitor at the user interface **105.**

In step **310,** the user starts recording a macro. In one exemplary embodiment, the user begins recording a macro by selecting "record macro" from a drop-down box in the application **117.** A dialog box may then appear so that the user can name the macro to be recorded, choose where to store the macro in the database **115** and provide a brief description of the macro, such as the purpose for creating the macro or the macro's function. Once the user has completed the description of the macro, the user can close the dialog box and the application **117** begins recording the macro.

In step **315,** the user performs a recordable action and the application **117** performs the recordable action in step **320.** A recordable action is any operation the user makes in the application **117,** including a keystroke, a selection of data from a particular area of the application **117,** or a mathematical determination. In step **325,** an inquiry is conducted to determine if the recordable action, performed by the user, will be recorded. If not, the "NO" branch is followed to step **365,** where another inquiry is conducted to determine if the user performs another recordable action. If the action will be recorded, the "YES" branch is followed to step **330.**

In step **330**, the application **117** builds an instruction list **155** in the macro recorder engine **140.** The instruction list **155** typically contains a series of instructions outlining the operation of the macro in a computer language independent syntax. The instructions are an interpretation of the user's recorded actions in a computer language independent syntax. In step **335**, the application **117** sends the instruction list **155** to the macro recorder engine **140.** The macro recorder engine **140** sends the instruction list **155** to one or more processors **135** in step **345.** The determination of when to send the instruction list **155** to one or more processors **135** is typically determined by the application **117.** For example, once a user completes an action which will generate a corresponding line of source code, the application **117** will generally send the instruction list **155,** created from the user's action, to the processor **135.** The processor **135** can reside inside or outside the application **117** and can include processors **135** capable of generating code in multiple computer languages, such as C++, C#, VBA, and VB.Net. The macro recorder **145** can send a single instruction list **155** to one or more processors **135** in step **345** to generate one or more types of language specific source code based on the user's intended use of the macro and the user's language preference.

In step **350,** the processor **135** converts the instruction list **155** from the computer language independent syntax into a language specific source code, such as C++, C#, VBA, or VB.Net. The processor **135** sends the language specific source code to the macro recorder engine **140,** in step **355.** In step **360,** the macro recorder engine **140** saves the language specific source code in an appropriate location. In one exemplary embodiment, appropriate locations for saving source code include the database **115,** the VSA subsystem **125,** the VBA subsystem **130** or the application **117.** For example, the recorder **145** can send the instruction list **155** to a VBA processor **135** to process the instruction list **155** into VBA code. Once processed, the VBA code is sent to the macro recorder engine **140,** which then sends the VBA code to the VBA recorder **170** in the VBA subsystem **130.** In one exemplary embodiment, the application **117** determines the appropriate location and presents the choices to the user through the user interface **105.** The user then decides on the appropriate location based on the choices provided. In step **361,** the builder **150** deletes the instruction list **155.** The application **117** deletes the builder **150** in step **362.**

In step **365,** an inquiry is conducted to determine if the user has performed another recordable action in the application **117.** If so, the "YES" branch is followed to step **325** to determine if the action will be recorded. If the user does not perform another recordable action, the "NO" branch is followed to step **370.** In step **370,** the user stops recording the macro in the application **117**. The user can stop recording the macro by selecting "stop recording macro" from a drop-down box in the application **117,** appearing on the monitor of the user interface **105.** The macro is now in a language specific code and can be accessed by the user in the application **117.** The method **300** then terminates at the END step.

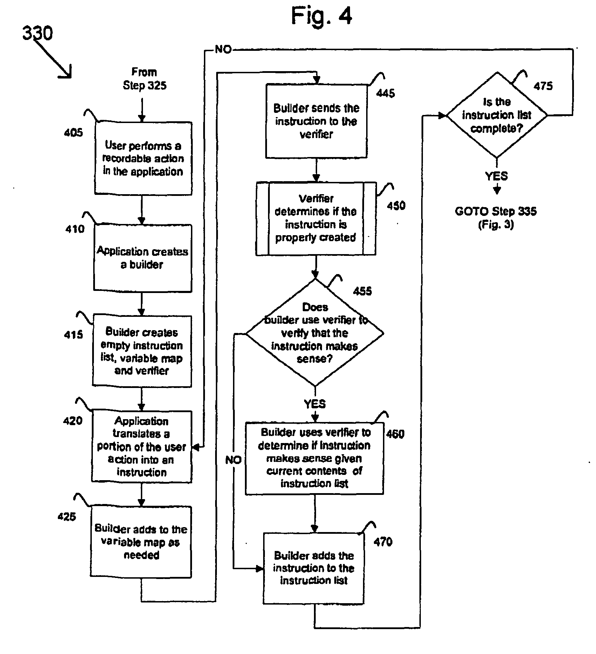

Fig. 4 is a logical flowchart diagram illustrating an exemplary computer-implemented method for building an instruction list **155** in a computer language independent syntax as completed by step **330** of Fig. 3. Referencing Figs. 1B, 3, and 4, the method **330** is initiated with the user performing a recordable action in the application **117** in step **405.** In step **410,** the application **117** creates a builder **150** in the macro recorder engine **140**. The builder **150** is typically created for each recorded user action in the application **117.** However, in an alternate exemplary embodiment, the builder **150** can be reset with an empty instruction list **155** after a previous instruction list **155** is processed by the processor **135,** thereby eliminating the necessity of creating a new builder **150** for each recorded user action.

The builder **150** creates an empty instruction list **155,** variable map **165,** and verifier **160** in the macro recorder engine **140** in step **415.** The instruction list **155,** variable map **165,** and verifier **160** are typically created for each recordable user action in the application **117.** However, in an alternate exemplary embodiment, the instruction list **155**, variable map **165,** and verifier **160** can be reset and the instruction list **155** emptied after the instruction list **155** is processed by the processor **135,** thereby eliminating the necessity of creating a new instruction list **155,** variable map **165,** and verifier **160** for each recorded user action.

In step **420**, the application **117** translates a portion of the recorded user action into an instruction having a computer language independent syntax. The builder **150** adds information from the instruction to the variable map **165** as needed in step **425.** Information will be added to the variable map **165** from the builder **150** if the instruction contains a variable not previously used in an earlier instruction. In step **445,** the builder **150** sends the instruction to the verifier **160.** The verifier **160** determines if the instruction is properly created in step **450.** To determine if the instruction is properly created, the verifier **160** examines the code of the instruction to verify proper code construction including a determination of whether or not the instruction contains the correct type and number of operands or the proper type of information to execute a call.

In step **455**, an inquiry is conducted to determine if the builder **150** uses the verifier **160** to determine if the current instruction is properly constructed with respect to the current contents of the instruction list **155.** If so, the "YES" branch is followed to step **460,** where builder **150** uses the verifier **160** to determine if the instruction makes sense given the current contents of the instruction list **155.** The process then continues to step **470.** If the builder **150** does not use the verifier **160** to determine if the current instruction is properly constructed with respect to the current contents of the instruction list **155**, the "NO" branch is followed to step **470**. In step **470**, the builder **150** adds the instruction to the instruction list **155.**

In_step **475,** an inquiry is conducted to determine if the instruction list **155** is complete. If not, the ''NO'' branch is followed to step **420,** where the application **117** translates another portion of the user actions into instructions having a computer language independent syntax. If the instruction list **155** is complete, the "YES" branch is followed to step **335** of Fig. 3.

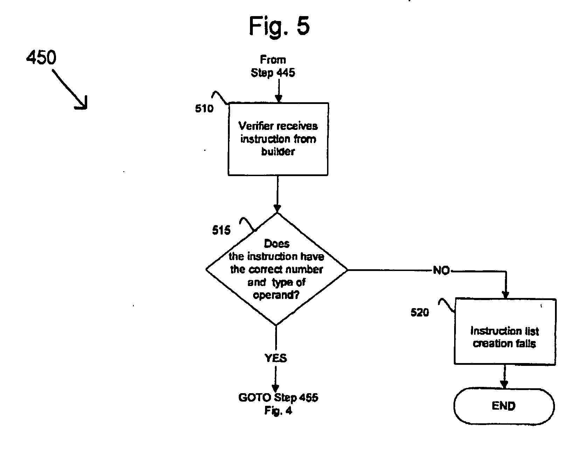

Fig. 5 is a logical flowchart diagram illustrating an exemplary computer-implemented method for a verifier **160** determining if an instruction is properly created as completed by step **450** of Fig. 4. Referencing Figs. 1B, 4, and 5, the method **450** is initiated with the verifier **160** receiving an instruction from the builder **150** in step **510.** In step **515** an inquiry is conducted to determine if the instruction, received by the verifier **160,** contains the correct number and type of operands. If not, the "NO" branch is followed to step **520** where the instruction list **155** creation fails and the process ends. If the instruction contains the correct number and type of operands, the "YES" branch is followed to step **455** of Fig. 4.

In conclusion, the present invention enables users and developers to create and employ macros in a variety of different programming languages. By using the language independent syntax of OIL, a macro can be created in one language and does not have to be created separately in other languages. Instead, the OIL language converts the instructions of the original macro to a set of neutral instructions that can be converted into a variety of different languages.

It will be appreciated that the present invention fulfills the needs of the prior art described herein and meets the above-stated objectives. While there have been shown and described several exemplary embodiments of the present invention, it will be evident to those skilled in the art that various modifications and changes may be made thereto without departing from the invention as set forth in the appended claims. For instance, the methods of the present invention could be applied to computer-readable instruction beyond those typically described as macros.

## Claims

1. A computer-implemented method for recording instructions in any of a plurality of source code languages, comprising the steps of:
accepting a request to record at least one action in a computer system (1; 100);
initiating a recording system (140) in the computer system to record at least one action;
accepting an at least one action performed on the computer system;
recording the at least one action performed on the computer system with the recording system;
converting the at least one action recorded with the recording system into an at least one instruction (205)
**characterized in that**
said at least one instruction (205) having a computer language independent syntax; and
said computer-implemented method further comprising:
adding the at least one instruction (205) having a computer language independent syntax to an instruction list (155; 200) having a computer language independent syntax, wherein the instruction list (155; 200) comprises an operand (250) such that the operand (250) is defined as a named storage location capable of being modified;
verifying whether code of the at least one instruction (205) is constructed properly; and
converting the instruction list (155; 200) into one of a plurality of source code languages.

2. The method of Claim 1 further comprising the steps of:
determining if another action comprising at least one instruction (205) is accepted by the computer system;
accepting a request to cease recording; and
terminating the recording by the recording system.

3. The method of Claim 1, wherein the step of adding the at least one instruction (205) to an instruction list (155; 200) having a computer independent syntax comprises the steps of:
creating an instruction list;
adding the instruction having the computer language independent syntax to an instruction list comprising at least one instruction having the computer language independent syntax.
sending the instruction list comprising at least one instruction having the computer language independent syntax to at least one of a plurality of processors (135) operable for receiving the instruction list and generating at least one source code; and
processing the instruction list comprising at least one instruction having the computer language independent syntax into a language specific source code in the at least one of a plurality of processors.

4. The method of Claim 3 further comprising the steps of:
accepting the instruction having the computer language independent syntax into the verifier (160); and
based on a positive determination, allowing the verifier to determine if the instruction having the computer language independent syntax is properly constructed based on the contents of the instruction list.

5. The method of Claim 3, wherein the instruction list is created by a builder residing in a software application for each macro recorded.

6. The method of Claim 5, wherein the builder is created by the software application for each macro recorded.

7. The method of Claim 3 wherein the builder (150) creates the verifier (160), the variable map (165) and the instruction list for each macro to be recorded in the software application.

8. The method of Claim 1, wherein a source code emitted in the one of a plurality of source code languages in response to the at least one action comprises a macro.

9. The method of Claim 1 wherein the one of a plurality of source code languages is created in at least one of a plurality of processors operable for receiving the instruction list and generating at least one source code.

10. The method of Claim 9, wherein the at least one of a plurality of processors comprises a C Sharp processor, a C Plus Plus processor, a VBA processor, and a VB. Net processor.

11. The method of Claim 1, wherein the instruction list comprises:
an at least one instruction which can be recognized by a processor operable for receiving the instruction list and generating at least one source code and converted into source code in a computer system; and
an operand specifying the information upon which the instruction operates or manipulates in the computer system.

12. A computer-readable medium having computer-executable instructions for performing the steps recited in Claim 1.

13. A system (1; 100) for recording instructions in any of a plurality of source code languages comprising:
a user interface (105);
a server (110) coupled to the user interface and to a database (115), wherein the database contains information related to a macro recorder (140);
said macro recorder (140) comprising:
a recorder (145) coupled to the database providing a means to record actions initiated at the user interface;
a builder (150) coupled to the recorder, operable for receiving the recorded actions from the recorder and generating an at least one instruction based on the recorded action;
an instruction list (155; 200) coupled to the builder, operable for receiving the at least one instruction generated from the builder, wherein the instruction list (155; 200) comprises an operand (250) such that the operand (250) is defined as a named storage location capable of being modified; and
said system comprising at least one of a plurality of processors (135) coupled to the builder, operable for receiving the instruction list and generating at least one source code;
a software application (117) coupled to the database (115) and a plurality of dynamic link libraries; and
a verifier (160) coupled to the builder (150) and the at least one of a plurality of processors (135), the verifier operable to:
verifying that the instruction list (155; 200) is properly constructed by determining whether the at least one instruction contains at least one of a correct type of operand or a correct number of operands to execute a call;

14. The system of Claim 13 further comprising:
a variable map (165) coupled to the builder (150) and the at least one of a plurality of processors (135), operable for evaluating the instruction list for variables contained in the instructions.

15. The system of Claim 14, further comprising a subsystem (125; 130) for receiving the generated source code and storing the generated source code until needed.

16. The system of Claim 13, wherein the one of a plurality of processors (135) comprises a Visual Basic for Applications processor.

17. The system of Claim 13, wherein the one of a plurality of processors (135) comprises a C Plus Plus processor.

18. The system of Claim 13, wherein the one of a plurality of processors (135) comprises a C Sharp processor.

19. The system of Claim 13, wherein the one of a plurality of processors (135) comprises a Visual Basic.Net processor.

20. The system of Claim 14, wherein the builder (150) is located in the software application (117).

21. The system of Claim 13, wherein the builder is coupled to a plurality of software applications, capable of building instructions in a computer language independent syntax for the plurality of software applications.

22. A computer-readable medium for performing a method of recording instructions in any of a plurality of source code languages, comprising the steps of:
accepting a request to record at least one action in a computer system (1; 100);
initiating a recording system (140) in the computer system to record at least one action;
accepting at least one action performed on the computer system;
converting the at least one action performed on the computer system into at least one instruction (205) having a computer language independent syntax;
adding the at least one instruction (205) into an instruction list (155; 200) having a computer language independent syntax, wherein the instruction list (155; 200) comprises an operand (250) such that the operand (250) is defined as a named storage location capable of being modified;
determining whether the at least one instruction (205) contains a correct number of operands to execute a call; and
converting the instruction list having the computer language independent syntax into one of a plurality of source codes.

## Patentansprüche

1. Computerimplementiertes Verfahren zum Aufzeichnen von Befehlen in einer beliebigen einer Vielzahl von Quellcode-Sprachen, das die folgenden Schritte umfasst:
Akzeptieren einer Anforderung zum Aufzeichnen eines Vorgangs in einem Computersystem (1; 100);
Auslösen eines Aufzeichnungssystems (140) in dem Computersystem zum Aufzeichnen wenigstens eines Vorgangs;
Akzeptieren wenigstens eines Vorgangs, der an dem Computersystem durchgeführt wird;
Aufzeichnen des wenigstens einen an dem Computersystem durchgeführten Vorgangs mit dem Aufzeichnungssystem;
Umwandeln des wenigstens einen mit dem Aufzeichnungssystem aufgezeichneten Vorgangs in wenigstens einen Befehl (205),
**dadurch gekennzeichnet, dass**
der wenigstens eine Befehl (205) eine von Computersprache unabhängige Syntax aufweist; und
das computerimplementierte Verfahren des Weiteren umfasst:
Hinzufügen des wenigstens einen Befehls (205), der eine von Computersprache unabhängige Syntax aufweist, zu einer Befehlsliste (155; 200), die eine von Computersprache unabhängige Syntax aufweist, wobei die Befehlsliste (155; 200) einen Operanden (250) umfasst und der Operand (250) als ein benannter Speicherort definiert ist, der modifiziert werden kann;
Prüfen, ob Code des wenigstens einen Befehls (205) ordnungsgemäß aufgebaut ist; und
Umwandeln der Befehlsliste (155; 200) in eine einer Vielzahl von Quellcode-Sprachen.

2. Verfahren nach Anspruch 1, das des Weiteren die folgenden Schritte umfasst:
Feststellen, ob ein weiterer Vorgang, der wenigstens einen Befehl (205) umfasst, von dem Computersystem akzeptiert wird;
Akzeptieren einer Anforderung, die Aufzeichnung einzustellen; und
Beenden der Aufzeichnung durch das Aufzeichnungssystem.

3. Verfahren nach Anspruch 1, wobei der Schritt des Hinzufügens des wenigstens einen Befehls (205) zu einer Befehlsliste (155; 200), die eine computerunabhängige Syntax aufweist, die folgenden Schritte umfasst:
Erzeugen einer Befehlsliste;
Hinzufügen des Befehls, der die von Computersprache unabhängige Syntax aufweist, zu einer Befehlsliste, die wenigstens einen Befehl umfasst, der die von Computersprache unabhängige Syntax aufweist,
Senden der Befehlsliste, die wenigstens einen Befehl umfasst, der die von Computersprache unabhängige Syntax aufweist, zu wenigstens einem einer Vielzahl von Prozessoren (135), die in Funktion die Befehlsliste empfangen und wenigstens einen Quellcode erzeugen können; und
Verarbeiten der Befehlsliste, die wenigstens einen Befehl umfasst, der die von Computersprache unabhängige Syntax aufweist, zu einem sprachspezifischen Quellcode in dem wenigstens einen einer Vielzahl von Prozessoren.

4. Verfahren nach Anspruch 3, das des Weiteren die folgenden Schritte umfasst:
Akzeptieren des Befehls, der die von Computersprache unabhängige Syntax aufweist, in der Prüfeinrichtung (160); und
auf Basis einer positiven Feststellung Zulassen, dass die Prüfeinrichtung auf Basis des Inhaltes der Befehlsliste feststellt, ob der Befehl, der die von Computersprache unabhängige Syntax aufweist, ordnungsgemäß konstruiert ist.

5. Verfahren nach Anspruch 3, wobei die Befehlsliste durch eine Erstellungseinrichtung (builder) erzeugt wird, die in einer Software-Anwendung für jedes aufgezeichnete Makro resident ist.

6. Verfahren nach Anspruch 5, wobei die Erstellungseinrichtung durch die Software-Anwendung für jedes aufgezeichnete Makro erzeugt wird.

7. Verfahren nach Anspruch 3, wobei die Erstellungseinrichtung (150) die Prüfeinrichtung (160), die variable Zuordnungsdarstellung (map) (165) und die Befehlsliste für jedes in der Software-Anwendung aufzuzeichnende Makro erzeugt.

8. Verfahren nach Anspruch 1, wobei ein Quellcode, der in einer einer Vielzahl von Quellcode-Sprachen in Reaktion auf den wenigstens einen Vorgang ausgegeben wird, ein Makro umfasst.

9. Verfahren nach Anspruch 1, wobei die eine einer Vielzahl von Quellcode-Sprachen in wenigstens einem einer Vielzahl von Prozessoren geschaffen wird, die in Funktion die Befehlsliste empfangen und wenigstens einen Quellcode generieren können.

10. Verfahren nach Anspruch 9, wobei der wenigstens eine einer Vielzahl von Prozessoren einen C Sharp Prozessor, einen C Plus Plus-Prozessor, einen VBA-Prozessor und einen VB.Net-Prozessor umfasst.

11. Verfahren nach Anspruch 1, wobei die Befehlsliste umfasst:
wenigstens einen Befehl, der durch einen Prozessor erkannt werden kann, der in Funktion die Befehlsliste empfangen und wenigstens einen Quellcode generieren kann, und der in Quellcode in einem Computersystem umgewandelt werden kann; und
einen Operanden, der die Informationen spezifiziert, die der Befehl in dem Computersystem bearbeitet oder manipuliert.

12. Computerlesbares Medium, das durch Computer ausführbare Befehle zum Durchführen der in Anspruch 1 aufgeführten Schritte aufweist.

13. System (1; 100) zum Aufzeichnen von Befehlen in einer beliebigen einer Vielzahl von Quellcode-Sprachen, das umfasst:
eine Benutzerschnittstelle (105);
einen Server (110), der mit der Benutzerschnittstelle und mit einer Datenbank (115) gekoppelt ist, wobei die Datenbank Informationen beinhaltet, die sich auf eine Makro-Aufzeichnungseinrichtung (140) beziehen;
wobei die Makro-Aufzeichnungseinrichtung (140) umfasst:
eine Aufzeichnungseinrichtung (145), die mit der Datenbank gekoppelt ist und eine Einrichtung zum Aufzeichnen von Vorgängen bildet, die an der Benutzerschnittstelle ausgelöst werden;
eine Erstellungseinrichtung (builder) (150), die mit der Aufzeichnungseinrichtung gekoppelt ist und in Funktion die aufgezeichneten Vorgänge von der Aufzeichnungseinrichtung empfangen und wenigstens einen Befehl auf Basis des aufgezeichneten Vorgangs generieren kann;
eine Befehlsliste (155; 200), die mit der Erstellungseinrichtung gekoppelt ist und in Funktion den wenigstens einen von der Erstellungseinrichtung generierten Befehl empfangen kann, wobei die Befehlsliste (155; 200) einen Operanden (250) umfasst und der Operand (250) als ein benannter Speicherort definiert ist, der modifiziert werden kann; und
das System wenigstens einen einer Vielzahl von Prozessoren (135) umfasst, der mit der Erstellungseinrichtung gekoppelt und in Funktion die Befehlsliste empfangen und wenigstens einen Quellcode generieren kann;
eine Software-Anwendung (117), die mit der Datenbank (115) und einer Vielzahl dynamischer Programmverbindungsbibliotheken (dynamic link libraries) gekoppelt ist; und
eine Prüfeinrichtung (160), die mit der Erstellungseinrichtung (150) und dem wenigstens einen einer Vielzahl von Prozessoren (135) gekoppelt ist, wobei die Prüfeinrichtung in Funktion
prüfen kann, ob die Befehlsliste (155; 200) ordnungsgemäß aufgebaut ist, indem sie feststellt, ob der wenigstens eine Befehl wenigstens einen richtigen Typ eines Operanden oder eine richtige Anzahl von Operanden zum Ausführen eines Aufrufs beinhaltet.

14. System nach Anspruch 13, das des Weiteren umfasst:
eine variable Zuordnungsdarstellung (165), die mit der Erstellungseinrichtung (150) und dem wenigstens einen einer Vielzahl von Prozessoren (135) gekoppelt ist und in Funktion die Befehlsliste auf Variablen hin bewerten kann, die in den Befehlen beinhaltet sind.

15. System nach Anspruch 14, das des Weiteren ein Teilsystem (125; 130) umfasst, mit dem der generierte Quellcode empfangen wird und der generierte Quellcode gespeichert wird, bis er benötigt wird.

16. System nach Anspruch 13, wobei der eine einer Vielzahl von Prozessoren (135) einen VBA-Prozessor umfasst.

17. System nach Anspruch 13, wobei der eine einer Vielzahl von Prozessoren (135) einen C Plus Plus Prozessor umfasst.

18. System nach Anspruch 13, wobei der eine einer Vielzahl von Prozessoren (135) einen C Sharp Prozessor umfasst.

19. System nach Anspruch 13, wobei der eine einer Vielzahl von Prozessoren (135) einen VB.Net-Prozessor umfasst.

20. System nach Anspruch 14, wobei sich die Erstellungseinrichtung (150) in der Software-Anwendung (117) befindet.

21. System nach Anspruch 13, wobei die Erstellungseinrichtung mit einer Vielzahl von Software-Anwendungen gekoppelt ist, die Befehle in einer von Computersprache unabhängigen Syntax für die Vielzahl von Software-Anwendungen erstellen können.

22. Computerlesbares Medium zum Durchführen eines Verfahrens zum Aufzeichnen von Befehlen in einer beliebigen einer Vielzahl von Quellcode-Sprachen, das die folgenden Schritte umfasst:
Akzeptieren einer Anforderung zum Aufzeichnen wenigstens eines Vorgangs in einem Computersystem (1; 100);
Auslösen eines Aufzeichnungssystems (140) in dem Computersystem zum Aufzeichnen wenigstens eines Vorgangs;
Akzeptieren wenigstens eines Vorgangs, der an dem Computersystem durchgeführt wird;
Umwandeln des wenigstens einen an dem Computersystem durchgeführten Vorgangs in wenigstens einen Befehl (205), der eine von Computersprache unabhängige Syntax aufweist;
Hinzufügen des wenigstens einen Befehls (205) zu einer Befehlsliste (155; 200), die eine von Computersprache unabhängige Syntax aufweist, wobei die Befehlsliste (155; 200) einen Operanden (250) umfasst und der Operand (250) als ein benannter Speicherort definiert ist, der modifiziert werden kann;
Feststellen, ob der wenigstens eine Befehl (205) eine richtige Anzahl von Operanden zum Ausführen eines Aufrufs beinhaltet; und
Umwandeln der Befehlsliste, die die von Computersprache unabhängige Syntax aufweist, in eine Vielzahl von Quellcodes.

## Revendications

1. Procédé mis en oeuvre par ordinateur pour enregistrer des instructions dans l'un quelconque de plusieurs langages code source comprenant les étapes :
d'acceptation d'une requête d'enregistrement d'au moins une action dans un système informatique (1 ; 100) ;
de déclenchement d'un système d'enregistrement (140) dans le système informatique pour enregistrer au moins une action ;
d'acceptation d'au moins une action exécutée sur le système informatique ;
d'enregistrement de l'action exécutée sur le système informatique avec le système d'enregistrement ;
de conversion de l'action enregistrée avec le système informatique dans au moins une instruction (205)
**caractérisé en ce que**
ladite instruction (205) a une syntaxe indépendante du langage informatique ; et
ledit procédé mis en oeuvre par ordinateur comprend en outre les étapes :
d'ajout de l'instruction (205) ayant une syntaxe indépendante du langage informatique à une liste d'instructions (155 ; 200) ayant une syntaxe indépendante du langage informatique, la liste d'instructions (155 ; 200) comprenant un opérande (250) tel que celui-ci est défini en tant qu'emplacement de stockage nommé apte à être modifié ;
de vérification si le code de l'instruction (205) est ou non construit correctement ;
de conversion de la liste d'instructions (155 ; 200) en l'un de plusieurs langages code source.

2. Procédé conformément à la revendication 1 comprenant en outre :
la détermination si une autre action comprenant au moins une instruction (205) est acceptée par le système informatique ;
l'acceptation d'une requête d'arrêt d'enregistrement ; et
la cessation de l'enregistrement par le système d'enregistrement.

3. Procédé conformément à la revendication 1, dans lequel l'étape d'ajout de l'instruction (205) à une liste d'instructions (155 ; 200) ayant une syntaxe indépendante de l'ordinateur comprend :
la création d'une liste d'instructions ;
l'ajout d'une instruction ayant la syntaxe indépendante du langage informatique à une liste d'instructions comprenant au moins une instruction ayant la syntaxe indépendante du langage informatique ;
l'envoi de la liste d'instructions comprenant au moins une instruction ayant la syntaxe indépendante du langage informatique à au moins l'un de plusieurs processeurs (135) apte à recevoir la liste d'instructions et à générer au moins un code source ; et
le traitement de la liste d'instructions comprenant au moins une instruction ayant la syntaxe indépendante du langage informatique en un code source spécifique au langage dans le processeur parmi plusieurs processeurs.

4. Procédé conformément à la revendication 3 comprenant en outre:
l'acceptation de l'instruction ayant la syntaxe indépendante du langage informatique dans le vérificateur (160) ; et
sur la base d'une détermination positive, la permission donnée au vérificateur de déterminer si l'instruction ayant la syntaxe indépendante du langage informatique est construite correctement sur la base des contenus de la liste d'instructions.

5. Procédé conformément à la revendication 3, dans lequel la liste d'instructions est créée par un module de construction résidant dans une application logicielle pour chaque macro enregistrée.

6. Procédé conformément à la revendication 5, dans lequel le module de construction est créé par l'application logicielle pour chaque macro enregistrée.

7. Procédé conformément à la revendication 3, dans lequel le module de construction (150) crée le vérificateur (160), la carte de variables (165) et la liste d'instructions pour chaque macro à enregistrer dans l'application logicielle.

8. Procédé conformément à la revendication 1, dans lequel un code source émis dans le langage code source parmi plusieurs langages code source en réponse à l'action comprend une macro.

9. Procédé conformément à la revendication 1, dans lequel le langage code source parmi plusieurs langages code source est créé dans au moins un processeur parmi plusieurs processeur apte à recevoir la liste d'instructions et à générer au moins un code source.

10. Procédé conformément à la revendication 9, dans lequel le ou les processeurs comprennent un processeur C Sharp, un processeur C Plus Plus, un processeur VBA, et un processeur VB.Net.

11. Procédé conformément à la revendication 1, dans lequel la liste d'instructions comprend :
au moins une instruction qui peut être reconnue par un processeur apte à recevoir une liste d'instructions et à générer au moins un code source et convertie en un code source dans un système informatique ; et
un opérande spécifiant les informations devant être soumises à un traitement ou manipulées par l'instruction dans le système informatique.

12. Support lisible par ordinateur ayant des instructions exécutables par ordinateur pour exécuter les étapes de la revendication 1.

13. Système (1 ; 100) pour enregistrer des informations dans l'un quelconque de plusieurs langages code source comprenant :
une interface utilisateur (105) ;
un serveur (110) couplé à l'interface utilisateur et à une base de données (115), la base de données contenant des informations concernant un enregistreur de macro (140) ;
ledit enregistreur de macro (140) comprenant :
un enregistreur (145) couplé à la base de données fournissant un moyen pour enregistrer des actions déclenchées au niveau de l'interface utilisateur ;
un module de construction (150) couplé à l'enregistreur, apte à recevoir les actions enregistrées de l'enregistreur et à générer au moins une instruction sur la base de l'action enregistrée ;
une liste d'instructions (155 ; 200) couplée au module de construction, apte à recevoir l'instruction générée par le module de construction, la liste d'instructions (155 ; 200) comprenant un opérande (250) tel que celui-ci est défini en tant qu'emplacement de stockage nommé apte à être modifié ; et
ledit système comprenant au moins l'un de plusieurs processeurs (135) couplé au module de construction, apte à recevoir la liste d'instructions et à générer au moins un code source ;
une application logicielle (117) couplée à la base de données (115) et plusieurs bibliothèques de liaison dynamiques ; et
un vérificateur (160) couplé au module de construction (150) et au processeur (135), le vérificateur étant apte à :
vérifier que la liste d'instructions (155 ; 200) est construite correctement en déterminant si le ou les instructions contiennent un type correct d'opérandes et/ou un nombre correct d'opérandes pour exécuter un appel ;

14. Système conformément à la revendication 13 comprenant en outre :
une carte de variables (165) couplée au module de construction (150) et au processeur (135), apte à évaluer la liste d'instructions pour des variables contenues dans les instructions.

15. Système conformément à la revendication 14 comprenant en outre un sous-système (125 ; 130) pour recevoir le code source généré et stocker le code source généré jusqu'à utilisation.

16. Système conformément à la revendication 13, dans lequel le processeur parmi plusieurs processeurs (135) comprend un processeur pour Visual Basics.

17. Système conformément à la revendication 13, dans lequel le processeur parmi plusieurs processeurs (135) comprend un processeur C++.

18. Système conformément à la revendication 13, dans lequel le processeur parmi plusieurs processeurs (135) comprend un processeur C Sharp.

19. Système conformément à la revendication 13, dans lequel le processeur parmi plusieurs processeurs (135) comprend un processeur Visual Basic.Net.

20. Système conformément à la revendication 14, dans lequel le module de construction (150) est situé dans l'application logicielle (117).

21. Système conformément à la revendication 13, dans lequel le module de construction est couplé à plusieurs applications logicielles, lequel module est capable de construire des instructions dans une syntaxe indépendante du langage informatique pour les applications logicielles.

22. Support lisible par ordinateur pour exécuter un procédé d'enregistrement des instructions dans l'un quelconque de plusieurs langages code source comprenant :
l'acceptation d'une requête d'enregistrement d'au moins une action dans un système informatique (1 ; 100) ;
le déclenchement d'un système d'enregistrement (140) dans le système informatique pour enregistrer au moins une action ;
l'acceptation d'au moins une action exécutée sur le système informatique ;
convertir l'action exécutée sur le système informatique en au moins une instruction (205) ayant une syntaxe indépendante du langage informatique ;
l'ajout de l'instruction (205) dans une liste d'instructions (155 ; 200) ayant une syntaxe indépendante du langage informatique, la liste d'instructions (155 ; 200) comprenant un opérande (250) tel que celui-ci est défini en tant qu'emplacement de stockage nommé apte à être modifié ;
la détermination si l'instruction (205) contient ou non un nombre correct d'opérandes pour exécuter un appel ;
la conversion de la liste d'instructions ayant la syntaxe indépendante du langage informatique en plusieurs codes source.
